# EUROPÄISCHE PATENTSCHRIFT

(11) **EP 1 878 939 B1**
(45) Veröffentlichungstag und Bekanntmachung des Hinweises auf die Patenterteilung: **01.07.2009**
(21) Anmeldenummer: 07012669.3
(22) Anmeldetag: 28.06.2007
(51) Int. Cl.: F16F 9/05

(54) **Leichtbau-Tauchkolben**
Lightweight plunger
Piston pour construction légère

(30) Priorität: 13.07.2006 DE 102006032383
(43) Veröffentlichungstag der Anmeldung: 16.01.2008
(73) Patentinhaber: Hermann Peters GmbH & Co., 58256 Ennepetal (DE)
(72) Erfinder: Mois, Peter, 58256 Ennepetal (DE); Weise, Bernd, 45527 Hattingen (DE); Greven, Franz, 58256 Ennepetal (DE)
(74) Vertreter: Schweiger, Johannes

(56) Entgegenhaltungen:
- EP-A- 1 300 264
- JP-A- 2002 293 119

## Beschreibung

Die Erfindung betrifft einen Tauchkolben für eine Luftfeder mit einer Tauchglocke, an deren Kopfende ein Rollbalg anschließbar ist und deren Außenseite eine im wesentlichen zylinderförmige Abrollfläche für den Rollbalg bildet, und mit einer die Tauchglocke an deren Fußende, vorzugsweise flächenbündig, abschließenden Abschlussplatte zum Anschluss des Tauchkolbens an einen Längslenker.

Solche Tauchkolben sind beispielsweise in der DE 31 45 231 C1 beschrieben und auf Grund der starken Beanspruchung häufig aus Stahl gebildet. Wegen der Anordnung des Tauchkolbens im ungefederten Bereich des Fahrzeugs besteht seit jeher ein Bestreben, den Tauchkolben und insbesondere die massive Bodenplatte sowie den Tauchkolben im Gewicht zu reduzieren.

Eine Gewichtsreduzierung wurde beispielsweise durch den in DE 197 10 849 A1 offenbarten Tauchkolben erreicht, indem dieser einerseits nach unten offen ausgebildet ist und andererseits die Tauchglocke aus glasfaserverstärktem Kunststoff mit radial verlaufenden Stegen gebildet ist.

Weitere Tauchkolben sind in der EP 1 300 264 A und der JP 2002 293119 A gezeigt.

Der Erfindung liegt die Aufgabe zu Grunde, das Gewicht des Tauchkolbens zu reduzieren und gleichzeitig eine verbesserte Kraftverteilung der am Tauchkolben angreifenden Kräfte zu bewirken.

Diese Aufgabe wird mit den Merkmalen des Anspruchs 1 gelöst, wobei vorteilhafte Weiterbildungen der Erfindung in den Unteransprüchen angegeben sind.

Der Erfindung liegt dabei der Gedanke zu Grunde, die Abschlussplatte aus einer Trägerplatte und einer Halteplatte zu bilden, wobei die Trägerplatte die Tauchglocke nach unten abschließt und insbesondere am Tauchglockenumfang wirkende Seitenkräfte wirksam aufnehmen kann, während die mit der Trägerplatte verbundene Halteplatte die unmittelbar am Längslenker und durch Verbindungsschraube auf die Abschlussplatte wirkenden Kräfte aufnimmt. Durch die Trennung der Abschlussplatte in verschiedene Funktionsbereiche können die einzelnen Bestandteile, nämlich Trägerplatte und Halteplatte an die jeweils wirkenden Kräfte angepasst werden.

Von besonderem Vorteil ist es dabei, wenn Trägerplatte und Halteplatte aus unterschiedlichem Material gebildet sind, wobei die Trägerplatte vorzugsweise ein geringeres spezifischeres Gewicht und/oder eine geringere spezifische Steifigkeit als die Halteplatte aufweist. Die Auswahl besonders geeigneter Materialien kann mit Vorteil anhand des spezifischen Gewichts und/oder der spezifischen Steifigkeit der Materialien festgelegt werden, wobei für die Trägerplatte glasfaserverstärkter Kunststoff und für die Halteplatte Stahl besonders geeignet erscheinen.

Um auf den Tauchkolben wirkende Seitenkräfte bereits in der Tauchglocke aufnehmen zu können, ist mit Vorteil vorgesehen, dass die Tauchglocke einen, vorzugsweise im Bereich deren Mittelachse angeordneten, Führungskanal zur Aufnahme einer Verbindungsschraube aufweist. Die Seitenkräfte können umso besser aufgenommen werden, wenn sich von dem Außenumfang des Führungskanals vorzugsweise radial verlaufende Verstärkungsrippen zur Innenmantelfläche der Tauchglocke erstrecken. Die Verbindungsschraube dient der Verbindung zwischen dem Rollbalg, der Tauchglocke und der Abschlussplatte.

Zur Minimierung der Baugröße des Tauchkolbens ist in einer zweckmäßigen Fortbildung der Erfindung vorgesehen, dass die Tauchglocke einen am Fußende angeordneten, durch Innenmantelfläche und den zum Fußende gerichteten Stirnseiten der Verstärkungsrippen begrenzten Aufnahmeraum zur Aufnahme der Abschlussplatte aufweist, wobei die Außenkontur der Abschlussplatte und der Aufnahmeraum formkomplementär ausgebildet sind.

Durch die Maßnahme, dass Trägerplatte und die Halteplatte je eine mit dem Führungskanal fluchtende Durchgangsöffnung aufweisen, wobei eine der Durchgangsöffnungen mit einer Schulter zur Anlage der Verbindungsschraube versehen ist, ist eine optimale Integration des Schraubenkopfes der Verbindungsschraube möglich, wobei der Schraubenkopf zusätzlich gesichert werden kann.

Das Gewicht der Halteplatte kann insbesondere dadurch verringert werden, dass die Halteplatte vorzugsweise verstärkte Befestigungszonen zur Verbindung des Tauchkolbens mit dem Längslenker aufweist. Hierdurch können die verbleibenden Zonen der Halteplatte ohne die Gefahr des Lösens von mit den Befestigungszonen verbundenen Befestigungsmitteln im Gewicht reduziert werden.

Bevorzugt sind in der Halteplatte vorzugsweise durchgehende, insbesondere kreisförmige Ausnehmungen vorgesehen, um eine weitere Gewichtsreduzierung zu bewirken.

Weitere Vorteile und zweckmäßige Ausführungen der Erfindung sind in den weiteren Ansprüchen, den Figuren, der Beschreibung und den Zeichnungen wiedergegeben.

Es zeigen:
- Fig. 1: eine perspektivische Ansicht eines Ausführungsbeispiels eines Tauchkolbens mit Verstärkungsrippen und eingesetzter Verbindungsschraube sowie Abschlussplatte von unten,
- Fig. 2a: eine perspektivische Ansicht eines Ausführungsbeispiels einer Abschlussplatte,
- Fig. 2b: eine perspektivische Ansicht eines weiteren Ausführungsbeispiels einer Abschlussplatte und
- Fig. 3: eine perspektivische Ansicht eines Ausführungsbeispiels einer Haltplatte.

In den Figuren sind gleiche Bauteile und Bauteile mit gleicher Funktion mit den gleichen Bezugszeichen gekennzeichnet.

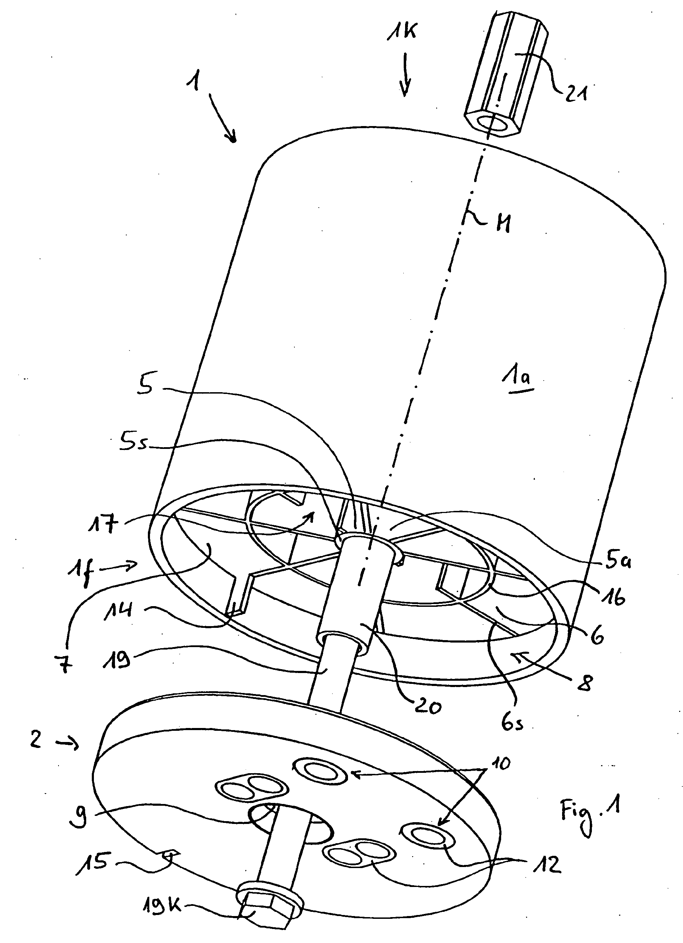

Fig. 1 zeigt einen Tauchkolben mit einer Tauchglocke 1 von ihrem Fußende 1f aus Die Tauchglocke 1 erstreckt sich über die dargestellte Außenseite 1a bis zu deren Kopfende 1k in einer zylinderförmigen Gestalt. Die Außenseite 1a dient als Abrollfläche für einen hier nicht dargestellten Rollbalg, dessen Volumen als Luftfeder dient, wobei der Rollbalg in entspanntem Zustand mit seinem Wulst am Kopfende anliegt und bei Kompression des im Rollbalg enthaltenen Luftvolumens in Richtung des Fußendes 1f der Tauchglocke 1 abrollt.

Die Tauchglocke 1 wird nach unten von einer Abschlussplatte 2 verschlossen, wobei die Abschlussplatte 2 durch eine Verbindungsschraube 19 mit einer an dem Rollbalg angebrachten Mutter 21 gehalten wird. Die Verbindungsschraube 19 erstreckt sich durch den Führungskanal 5 in welchem zur Abstützung von auf die Tauchglocke 1 wirkenden Stützkräften eine Hülse 20 eingesetzt ist, an der die Verbindungsschraube 19 anliegt. Die Tauchglocke 1 wird also durch die Verbindungsschraube 19 zwischen Abschlussplatte 2 und Rollbalg eingespannt. Die Mutter 21 weist vorzugsweise beidseitig ein Innengewinde auf, um von der Verbindungsschraube 19 abgewandten Seite einen Rollbalgdeckel anschlagen zu können.

Von der Innenmantelfläche 7 der Tauchglocke 1 erstrecken sich im Winkelabstand von 45° Verstärkungsrippen 6 bis zu einem Führungskanal 5, dessen Mittelachse M mit der Mittelachse M der Tauchglocke 1 zusammenfällt. Durch Reduzierung der Winkelabstände zwischen den Verstärkungsrippen 6 kann die Stabilität der Tauchglocke 1 weiter erhöht werden. Die Verstärkungsrippen 6 sind durch einen zwischen Innenmantelfläche 7 und Führungskanal 5 angeordneten Verstärkungsring 16 verstärkt, wobei der Verstärkungsring 16 vorzugsweise einstückig mit den Verstärkungsrippen 6 gebildet ist. Der Abstand von den Verstärkungsrippen 6 zu Innenmantelfläche 7 und Führungskanal 5 ist vorzugsweise etwa gleich.

Die Mittelachse M des Verstärkungsrings 16 fällt mit der Mittelachse M des Führungskanals 5 und mit der Mittelachse der Tauchglocke 1 zusammen. Die Tauchglocke 1 ist dabei so ausgebildet, dass sie als Strangpressprofil hergestellt werden kann.

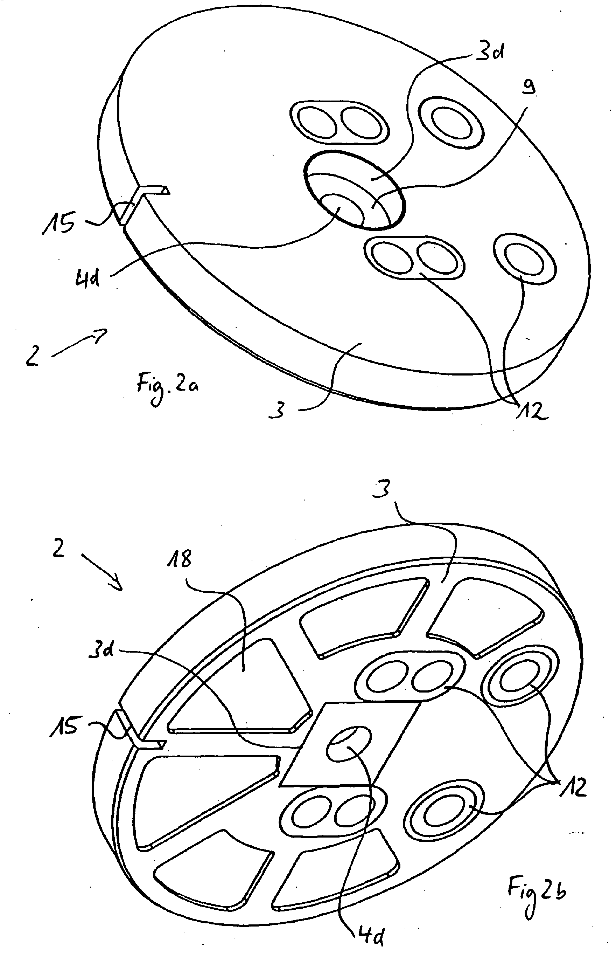

Die Stirnseite 5s des Führungskanals 5 sowie die Stirnseiten 6s der Verstärkungsrippen 6 begrenzen einen Aufnahmeraum 8 am Fußende 1f in Richtung Kopfende 1k. In Umfangsrichtung wird der Aufnahmeraum 8 durch die Innenmantelfläche 7 begrenzt, während der Aufnahmeraum 8 nach unten offen ist, um beispielsweise eine der in Fig. 2a und 2b gezeigten Ausführungsformen von Abschlussplatten 2 aufzunehmen. Dabei dient eine in den Aufnahmeraum 8 von der Innenmantelfläche 7 ragende Kodierrippe 14 der Ausrichtung der Abschlussplatte 2, indem die Abschlussplatte 2 eine entsprechende Kodierausnehmung 15 aufweist.

Die ordnungsgemäße Ausrichtung der Abschlussplatte 2 in Bezug auf die Tauchglocke 1 ist erforderlich, um Befestigungsmittel, die bei Befestigung der Abschlussplatte 2 am Längslenker durch Lochscheiben 12 hindurchragen, in Ausnehmungen 17 der Verstärkungsrippen 6 zu positionieren. Die Lochscheiben 12 sind vorzugsweise als Gewindeeinsätze ausgebildet.

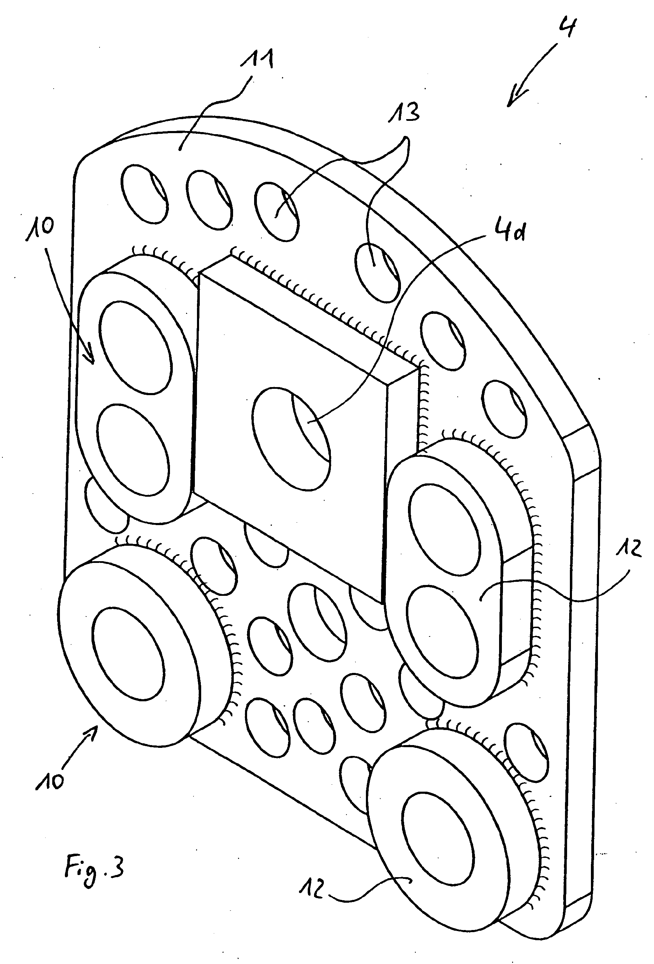

Die Abschlussplatte 2 besteht aus einer in Fig. 3 freigestellten Halteplatte 4, die in Fig. 2a und 2b durch eine Trägerplatte 3 teilweise verdeckt dargestellt ist und der Trägerplatte 3. Halteplatte 4 und Trägerplatte 3 sind vorzugsweise unlösbar miteinander verbunden, beispielsweise verklebt. Vorzugsweise ist die Halteplatte 4 in die Trägerplatte 3 eingegossen.

Die aus Trägerplatte 3 und Halteplatte 4 bestehende Abschlussplatte 2 wird über eine (nicht dargestellte) Verbindungsschraube, die sich durch Durchgangsöffnungen 3d, 4d und den Führungskanal 5 bis zu einem hier nicht dargestellten Rollbalg erstreckt, mit Rollbalg und Tauchglocke 1 verbunden, wobei die Verbindungsschraube 19 mit dem Schraubenkopf 19k an der Schulter 9 festgelegt wird. Etwaige Seitenkräfte werden durch die vollflächige Anlage der Abschlussplatte 2 an den Stirnseiten 6s der Verstärkungsrippen 6 bis zur Innenmantelfläche 7 wirksam aufgenommen.

Für die Verbindung der Abschlussplatte 2 mit dem hier nicht dargestellten Längslenker dienen Lochscheiben 12, die beispielsweise ein Innengewinde aufweisen oder mit Schrauben auf der gegenüberliegenden Seite befestigt werden. Für verschiedene Montagepositionen des Tauchkolbens auf dem Längslenker sind mehrere Lochscheiben 12 vorgesehen.

Die Halteplatte 4 besteht gemäß Fig. 3 aus einer Grundplatte 11, von der die - Befestigungszonen 10 bildenden - Lochscheiben 12 hervorstehen. Auch im Bereich der Durchgangsöffnung 4d ist die Halteplatte 4 verstärkt ausgebildet, da in diesem Bereich stärkere Haltekräfte benötigt werden.

In den außerhalb der Befestigungszonen 10 befindlichen Bereichen der Grundplatte 11 sind durchgehende, kreisförmige Ausnehmungen 13 mit Abstand zueinander vorgesehen, um eine weitere Gewichtsreduzierung zu erzielen.

Eine weitere Gewichtsreduzierung kann durch Ausbildung von mindestens einer, vorzugsweise tortenförmigen Aussparung 18 in der Oberfläche der Trägerplatte 3 erreicht werden.

### Bezugszeichenliste

- 1: Tauchglocke
- 1a: Außenseite
- 1f: Fußende
- 1k: Kopfende
- 2: Abschlussplatte
- 3: Trägerplatte
- 3d: Durchgangsöffnung
- 4: Halteplatte
- 4d: Durchgangsöffnung
- 5: Führungskanal
- 5s: Stirnseite
- 6: Verstärkungsrippen
- 6s: Stirnseiten
- 7: Innenmantelfläche
- 8: Aufnahmeraum
- 9: Schulter
- 10: Befestigungszonen
- 11: Grundplatte
- 12: Lochscheiben
- 13: Ausnehmungen
- 14: Kodierrippe
- 15: Kodierausnehmung
- 16: Verstärkungsring
- 17: Ausnehmungen
- 18: Aussparungen
- 19: Verbindungsschraube
- 19k: Schraubenkopf
- 20: Hülse
- 21: Mutter
- M: Mittelachse

## Patentansprüche

1. Tauchkolben für eine Luftfeder mit
- einer Tauchglocke (1), an deren Kopfende (1k) ein Rollbalg anschließbar ist und deren Außenseite (1a) eine im Wesentlichen zylinderförmige Abrollfläche für den Rollbalg bildet, und
- einer die Tauchglocke (1) an deren Fußende (1f), vorzugsweise flächenbündig, abschließenden Abschlussplatte (2) zum Anschluss des Tauchkolbens an einen Längslenker.
**dadurch gekennzeichnet,**
**dass** die Abschlussplatte (2) aus
- einer formkomplementär zum Fußende gebildeten Trägerplatte (3) und
- einer zwischen Tauchglocke (1) und Trägerplatte (3) aufgenommenen, in die Trägerplatte (3) eingegossenen Halteplatte (4)
gebildet ist.

2. Tauchkolben nach Anspruch 1,
**dadurch gekennzeichnet,**
**dass** Trägerplatte (3) und Halteplatte (4) aus unterschiedlichem Material gebildet sind, wobei die Trägerplatte (3) vorzugsweise ein geringeres spezifisches Gewicht und/oder eine geringere spezifische Steifigkeit als die Halteplatte (4) aufweist.

3. Tauchkolben nach Anspruch 1 oder 2,
**dadurch gekennzeichnet,**
**dass** die Tauchglocke (1) einen, vorzugsweise im Bereich deren Mittelachse (M) angeordneten, Führungskanal (5) zur Aufnahme einer Verbindungsschraube aufweist, von dessen Außenumfang (5a) sich, vorzugsweise radial verlaufende, Verstärkungsrippen (6) zur Innenmantelfläche (7) der Tauchglocke (1) erstrecken.

4. Tauchkolben nach Anspruch 3,
**dadurch gekennzeichnet,**
**dass** die Tauchglocke (1) einen am Fußende (1f) angeordneten, durch Innenmantelfläche (7) und den zum Fußende (1f) gerichteten Stirnseiten (6s) der Verstärkungsrippen (6) begrenzten Aufnahmeraum (8) zur Aufnahme der Abschlussplatte (2) aufweist, wobei die Außenkontur der Abschlussplatte (2) und der Aufnahmeraum (8) formkomplementär ausgebildet sind.

5. Tauchkolben nach Anspruch 3 oder 4,
**dadurch gekennzeichnet,**
**dass** die Trägerplatte (3) und die Haltplatte (4) je eine mit dem Führungskanal (5) fluchtende Durchgangsöffnung (3d, 4d) aufweisen, wobei eine der Durchgangsöffnungen (3d, 4d) mit einer Schulter (9) zur Anlage des Kopfes der Verbindungsschraube versehen ist.

6. Tauchkolben nach einem der vorhergehenden Ansprüche,
**dadurch gekennzeichnet,**
**dass** die Halteplatte (4), vorzugsweise verstärkte, Befestigungszonen (10) zur Verbindung des Tauchkolbens mit dem Längslenker aufweist.

7. Tauchkolben nach einem der vorhergehenden Ansprüche,
**dadurch gekennzeichnet,**
**dass** die Halteplatte (4) aus einer Grundplatte (11) und darauf befestigten, insbesondere angeschweißten, die Befestigungszonen (10) bildenden Lochscheiben (12) gebildet ist.

8. Tauchkolben nach Anspruch 7,
**dadurch gekennzeichnet,**
**dass** die Grundplatte (11), vorzugsweise durchgehende, insbesondere kreisförmige, Ausnehmungen (13) aufweist.

9. Tauchkolben nach einem der vorhergehenden Ansprüche,
**dadurch gekennzeichnet,**
**dass** die Halteplatte (4) aus Stahl gebildet und in die aus glasfaserverstärktem Kunststoff gebildete Trägerplatte (3) eingegossen ist.

10. Tauchkolben nach einem der vorhergehenden Ansprüche,
**dadurch gekennzeichnet,**
**dass** die Tauchglocke (1) eine Kodierrippe (14) zur Ausrichtung der Abschlussplatte (2) an einer formkomplementären Kodierausnehmung (15) der Abschlussplatte (2) aufweist.

11. Luftfeder für Luftfederachsen mit einem Tauchkolben nach einem der vorhergehenden Ansprüche.

## Claims

1. A plunger piston for an air spring comprising
- a bell plunger (1) to the head end (1k) whereof a bellows can be connected and the outer side (1a) whereof forms a substantially cylindrical rolling surface for the bellows and
- an end plate (2) which terminates the plunger (1) at its foot end (1f), preferably in a flush manner, for connecting the plunger piston to a longitudinal link,
**characterised in**
**that** the end plate (2) is formed from
- a supporting plate (3) formed in a complementary shape to the foot end and
- a retaining plate (4) which is accommodated between plunger (1) and supporting plate (3), and cast in the supporting plate (3).

2. The plunger piston according to claim 1,
**characterised in**
**that** supporting plate (3) and retaining plate (4) are formed from different materials, wherein the supporting plate (3) preferably has a lower specific weight and/or a lower specific stiffness than the retaining plate (4).

3. The plunger piston according to claim 1 or 2,
**characterised in**
**that** the plunger (1) has a guide channel (5) preferably disposed in the area of its central axis (M) for receiving a connecting screw, from the outer circumference (5a) whereof preferably radially running reinforcing ribs (6) extend towards the inner circumferential surface (7) of the plunger (1).

4. The plunger piston according to claim 3,
**characterised in**
**that** the plunger (1) has a receiving space (8) located at the foot end (1f), defined by inner circumferential surface (7) and the front sides (6s) of the reinforcing ribs (6) directed towards the foot end (1f) for receiving the end plate (2), wherein the outer contour of the end plate (2) and the receiving space (8) are configured in complementary shape.

5. The plunger piston according to claim 3 or 4,
**characterised in**
**that** the supporting plate (3) and the retaining plate (4) each have a through opening (3d, 4d) in alignment with the guide channel (5), wherein one of the through openings (3d, 4d) is provided with a shoulder (9) for abutment of the head of the connecting screw.

6. The plunger piston according to any one of the preceding claims,
**characterised in**
**that** the retaining plate (4) has preferably reinforced fastening zones (10) for connecting the plunger piston to the longitudinal link.

7. The plunger piston according to any one of the preceding claims,
**characterised in**
**that** the retaining plate (4) is formed from a base plate (11) and perforated disks (12) forming the fastening zones (10), which are fastened thereon, preferably welded thereon.

8. The plunger piston according to claim 7,
**characterised in**
**that** the base plate (11) has preferably continuous, in particular circular, recesses (13).

9. The plunger piston according to any one of the preceding claims,
**characterised in**
**that** the retaining plate (4) is formed from steel and is cast into the supporting plate (3) formed from glass-fibre-reinforced plastic.

10. The plunger piston according to any one of the preceding claims,
**characterised in**
**that** the plunger (1) has a coding rib (14) for alignment of the end plate (2) on a complementarily shaped coding recess (15) of the end plate (2).

11. An air spring for air spring axles comprising a plunger piston according to one of the preceding claims.

## Revendications

1. Piston plongeur pour soufflet pneumatique, avec
- une cloche plongeuse (1), à la tête (1k) de laquelle peut être raccordé un soufflet vibrant et dont l'enveloppe extérieure (1a) forme une surface de roulement essentiellement cylindrique, destinée au soufflet vibrant, et
- un piston (1) au pied (1f) de laquelle terminée une plaque terminale (2), de préférence en affleurement, pour le raccordement du piston plongeur avec un bras oscillant longitudinal,
**caractérisé en ce que**
la plaque terminale (2) est formée par
- une plaque de support (3) présentant une forme complémentaire à celle du pied, et
- une plaque de maintien (4) coulée dans la plaque de support (3), admise entre le piston (1) et la plaque de support (3).

2. Piston plongeur selon la revendication 1,
**caractérisé en ce que**
la plaque de support (3) et la plaque de maintien (4) sont constituées de matériaux différents, la plaque de support (3) ayant de préférence un poids spécifique inférieur et/ou une rigidité spécifique inférieure par rapport à la plaque de maintien (4).

3. Piston plongeur selon l'une des revendications 1 ou 2,
**caractérisé en ce que**
le piston (1) comporte un canal de guidage (5) disposé de préférence dans la région de son axe médian (M), pour l'admission d'une vis de liaison, à partir du pourtour extérieur (5a) duquel s'étendent des nervures de renfort (6), de préférence radialement, en direction de la surface intérieure d'enveloppe (7) de le piston (1).

4. Piston plongeur selon la revendication 3,
**caractérisé en ce que**
le piston (1) comporte un espace d'admission (8) disposé du côté du pied (1f), délimité par la surface intérieure d'enveloppe (7) et par les faces frontales (6s) des nervures de renfort (6), qui sont orientées vers le pied (1f), pour l'admission de la plaque terminale (2), le contour extérieur de la plaque terminale (2) et celui de l'espace d'admission (8) étant conçus avec des formes complémentaires.

5. Piston plongeur selon l'une des revendications 3 ou 4,
**caractérisé en ce que**
la plaque de support (3) et la plaque de maintien (4) comportent chacune une ouverture débouchante (3d, 4d) en affleurement avec le canal de guidage (5), l'une des ouvertures débouchantes (3d, 4d) étant pourvue d'un épaulement (9) pour l'appui de la tête de la vis de liaison.

6. Piston plongeur selon l'une des revendications précédentes,
**caractérisé en ce que**
la plaque de maintien (4) comporte des zones de fixation (10), de préférence renforcées, pour relier le piston plongeur avec le bras oscillant longitudinal.

7. Piston plongeur selon l'une des revendications précédentes,
**caractérisé en ce que**
la plaque de maintien (4) est formée par une plaque de base (11) et par des plaques à trous (12) fixées sur celle-ci, notamment soudées, constituant les zones de fixation (10).

8. Piston plongeur selon la revendication 7,
**caractérisé en ce que**
la plaque de base (11) comporte des évidements (13), notamment circulaires, de préférence traversants.

9. Piston plongeur selon l'une des revendications précédentes,
**caractérisé en ce que**
la plaque de maintien (4) est constituée d'acier et coulée dans la plaque de support (3) en plastique renforcé par fibres de verre.

10. Piston plongeur selon l'une des revendications précédentes,
**caractérisé en ce que**
le piston (1) comporte une nervure de codage (14) pour l'orientation de la plaque terminale (2) par rapport à un évidement de codage (15) de la plaque terminale (2), de forme complémentaire.

11. Soufflet pneumatique pour axe de soufflet pneumatique, avec un piston plongeur selon l'une des revendications précédentes.
